# EUROPÄISCHE PATENTSCHRIFT

(11) **EP 1 488 094 B1**
(45) Veröffentlichungstag und Bekanntmachung des Hinweises auf die Patenterteilung: **04.11.2015**
(21) Anmeldenummer: 03744791.9
(22) Anmeldetag: 08.03.2003
(51) Int. Cl.: F02M 45/02, F02M 61/16, F02M 45/04, F02D 41/40, F02M 45/12, F02M 61/18

(54) **SELBSTZÜNDENDE BRENNKRAFTMASCHINE**
SELF-IGNITING INTERNAL COMBUSTION ENGINE
MOTEUR A COMBUSTION INTERNE A AUTO-ALLUMAGE

(30) Priorität: 22.03.2002 DE 10213025
(43) Veröffentlichungstag der Anmeldung: 22.12.2004
(73) Patentinhaber: Daimler AG, 70327 Stuttgart (DE)
(72) Erfinder: BLESSING, Matthias, 73663 Berglen (DE); KÖNIG, Gerhard, 73111 Lauterstein (DE); KRÜGER, Christian, 70597 Stuttgart (DE); PREISS, Rüdiger, 71364 Winnenden (DE); RAAB, Alois, 73560 Böbingen (DE); SCHNABEL, Martin, 73430 Aalen (DE)
(74) Vertreter: JENSEN & SON
(86) Internationale Anmeldenummer: PCT/EP2003/002392
(87) Internationale Veröffentlichungsnummer: WO 2003/081018

(56) Entgegenhaltungen:
- EP-A- 0 786 592
- EP-A- 1 035 314
- EP-A- 1 132 607
- EP-A- 1 302 650
- WO-A-02/079623
- DE-A- 19 636 088
- DE-A- 19 639 172
- DE-A- 19 953 932
- VAN BASSHUYSEN/SCHÄFER: "Handbuch Verbrennungsmotor, 2. Auflage" Juni 2002 (2002-06) , VIEWEG&SOHN , BRAUNSCHWEIG/WIESBADEN XP002244763 Seite 432, Absatz 12.5 -Seite 435, Absatz 3; Abbildungen 12-22,12-24

## Beschreibung

Die Erfindung betrifft ein Verfahren zum Betrieb einer Hubkolbenbrennkraftmaschine nach Anspruch 1, insbesondere einer Dieselbrennkraftmaschine.

Bei den modernen Brennkraftmaschinen mit Selbstzündung wird der Kraftstoff in einen Brennraum direkt eingespritzt. Bei einer solchen Verbrennung entstehen prinzipbedingt durch die heterogene Art der Verbrennungsführung zwangsläufig örtliche Zonen, bei denen ein nahezu stöchiometrisches Kraftstoff-/Luftgemisch vorliegt. In diesen Zonen ergeben sich hohe Verbrennungstemperaturen, wodurch eine hohe thermische NO-Bildung resultiert. Auf der anderen Seite entstehen weitere kraftstoffreiche Zonen, in denen Ruß gebildet wird. Bei guter turbulenter Vermischung und Luftüberschuss wird ein Teil des gebildeten Rußes wieder oxidiert, wobei ein vollständiger Rußausbrand nicht erreicht wird.

Aus der DE 19953932 A1 ist ein Verfahren bekannt, bei dem eine kombinierte homogen/heterogene Betriebsweise für die Erzielung mittlerer und höherer Lasten vorgeschlagen wird. Bei diesem Verfahren sollen mit einer Einspritzstrategie sowohl eine frühe homogene Gemischbildung im Kompressionshub als auch eine darauffolgende heterogene Gemischbildung um den oberen Totpunkt ermöglicht werden, wobei die Kraftstoffeinspritzung bei der homogenen Gemischbildung mit einem geringeren Einspritzdruck als bei der heterogenen Gemischbildung erfolgt, um ein Auftragen von Kraftstoff auf die kalten Brennraumwände zu vermeiden.

Es hat sich dennoch gezeigt, dass trotz der oben vorgeschlagenen Maßnahme Kraftstoffanteile an die Brennraumwände gelangen, die größtenteils nicht an der homogenen Verbrennung teilnehmen, und zu erhöhten HC- und CO-Emissionen führen. Daher müssen weitere Maßnahmen getroffen werden, mit denen jede weitere Brennraumwandbenetzung mit Kraftstoff verhindert werden.

Der Erfindung liegt die Aufgabe zugrunde, eine Verfahren für eine Brennkraftmaschine mit Selbstzündung zu schaffen, mit dem eine Kraftstoffanlagerung an den Wänden des Brennraums vermieden wird. Dies wird erfindungsgemäß durch die Merkmale des Anspruchs 1 gelöst.

Weitere Ausgestaltungen ergeben sich aus den Unteransprüchen. Nach dem erfindungsgemäßen Verfahren wird der Kraftstoff direkt in einen Brennraum mittels einer Einspritzvorrichtung eingespritzt, welche eine Einspritzdüse mit mehreren Einspritzbohrungen und einer Düsennadel umfasst. Ein Teil des Kraftstoffes des jeweiligen Zyklus erfolgt in einem Verdichtungshub der Brennkraftmaschine als eine getaktete Voreinspritzung in mehreren Teilmengen in Form von Kraftstoffstrahlen mit bestimmter Reichweite, wobei der restliche Kraftstoff als eine Haupteinspritzung zu einem späteren Zeitpunkt eingespritzt wird. Der Kraftstoff wird erfindungsgemäß während der Haupteinspritzung in den Brennraum wahlweise mit einem höheren Druck als während der Voreinspritzung eingespritzt.

Die Taktung der Voreinspritzung erfolgt erfindungsgemäß derart, dass die Reichweite des Kraftstoffstrahls bei jeder eingespritzten Teilmenge im Brennraum begrenzt wird. Die Reichweite ist in etwa kleiner als eine Entfernung bis zu einer Brennraumbegrenzung, wobei ein Zerfall der eingespritzten Kraftstoffstrahlen im Brennraum verstärkt wird. Die einzelnen Einspritztakte werden während der Voreinspritzung derart gestaltet, dass jeweils die Strahlimpulse der Einzeleinspritzungen angepasst werden, und bei der momentan vorliegenden Brennraumgasdichte die Reichweite der Kraftstoffstrahlen in etwa die Strecke bis zu der brennraumseitigen Zylinderwand oder dem Kolbenboden beträgt. Somit wird ein Kraftstoffwandauftrag vermieden. Die Steuerung des Einspritzstrahlimpulses und der EinspritzTeilmenge erfolgt durch die Pulsdauer in Kombination mit gezielter Nutzung der Drosselung des zuströmenden Kraftstoffes im Sitz der Düsennadel, so dass die eingespritzten Kraftstoffstrahlen durch eine verstärkte Zerstäubung zerfallen. Dadurch findet eine bestmögliche Gemischhomogenisierung der eingespritzten Teilmengen statt, wobei gleichzeitig ein signifikanter Kraftstoffauftrag auf die Zylinderwand vermieden wird.

Durch den höheren Druck werden für den heterogenen Verbrennungsanteil, die Kriterien für eine effektive konventionelle Einspritzung erfüllt, da es hier auf einen hohen Strahlimpuls, intensive Strahl-/Wand Interaktion, sowie eine möglichst gute Luftausnutzung und turbulente Mischung ankommt.

Gemäß einer Ausführungsform der Erfindung wird während der getakteten Voreinspritzung ein Hub der Düsennadel der Einspritzdüse variiert. Dies ermöglicht eine gezielte Kraftstoffeinspritzung während der getakteten Voreinspritzung, wodurch der Betriebsbereich mit rein homogener Verbrennung weiter ausgedehnt werden kann. Weiterhin ermöglicht die Variation des Nadelhubes einen hohen Homogenisierungsgrad, da die Anlagerung von Kraftstoffteilchen an den Brennraumwänden minimiert wird. Dadurch kann die Klopfneigung zu einem gewissen Grad verringert werden.

Erfindungsgemäß kann der Druck des eingespritzten Kraftstoffs während der getakteten Voreinspritzung variiert werden. Vorzugsweise wird dabei der Einspritzdruck angehoben, um während der Kompression den ansteigenden Brennraumdruck entgegenzuwirken. Dadurch kann beispielsweise die Eindringtiefe der Einspritzstrahlen im Brennraum während der getakteten Voreinspritzung konstant gehalten werden.

Gemäß einer weiteren Ausführung der Erfindung wird eine Taktdauer während der Voreinspritzung derart variiert, dass die Kraftstoffteilmengen der Voreinspritzung unterschiedlich erfolgen. Dabei kann die Variation derart gestaltet werden, dass die später eingespritzte Kraftstoffteilmenge größer als die vorherige Kraftstoffteilmenge erfolgt. Weiterhin kann erfindungsgemäß die letzte Kraftstoffteilmenge der Voreinspritzung gegenüber einer größten und vorher erfolgten Kraftstoffteilmenge der Voreinspritzung verringert werden, um eine starke Anfettung der bereits vorhomogenisierten Gemischwolke entgegenzuwirken.

Für eine höhere Zerstäubung des Kraftstoffs wird erfindungsgemäß der Hub der Düsennadel der Einspritzdüse variiert, so dass eine instabile kavitierende Strömung in den Einspritzbohrungen der Einspritzdüse erzeugt wird. Dadurch kann ein Aufweiten der Einspritzstrahlen und damit eine bessere Verteilung des Kraftstoffes erreicht werden.

Zur gezielten Einstellung einer gewünschten Drosselwirkung im Sitz der Düsennadel und einer instabilen kavitierenden Strömung kann mit einer geeigneten konstruktiven Maßnahme, beispielsweise durch einen 2-Federhalter am Einspritzventil oder einen Piezo- bzw. Magnetostriktive Ansteuerung das Verharren der Düsennadel auf einer Hubstellung, die zwischen der vollständig geschlossenen bzw. geöffneten Position liegt, unterstützt werden. Der effektive Strömungsquerschnitt im Nadelsitz, d.h. zwischen der Düsennadel und dem Nadelsitz, sollte dabei in etwa das 0.4 bis 1.5 -fache des effektiven Strömungsquerschnittes der Summe der Einspritzbohrungen betragen.

Durch die im Kompressionshub erzielte Gemischbildung der voreingespritzten Kraftstoffmenge wird bei der Verbrennung bei einem hohen Luftüberschuss eine nennenswerte thermische NO-Bildung, sowie eine Rußbildung vermieden, da der Kraftstoff fein und weiträumig im gesamten Brennraum verteilt wird. Bei der angepassten und spät erfolgten Haupteinspritzung wird für die heterogene Verbrennungsphase die thermische NO-Bildung deutlich vermindert, da die Sauerstoffkonzentration durch den vorangegangenen homogenen Verbrennungsanteil schon deutlich reduziert wird. Vorzugsweise wird eine intensive turbulente Ladungsbewegung durch die Einspritzung induziert, welche durch den hohen Einspritzdruck unterstützt wird.

Eine optimale Homogenisierung des voreingespritzten Kraftstoffanteile im Verdichtungshub wird durch die getaktete Voreinspritzung erreicht, so dass die zuerst eingespritzten Kraftstoffstrahlen im Brennraum verdampfen, und dann sich mit Luft vermischen, bevor die nächsten Strahlen darauf folgen. Da mit der Zunahme der Verdichtung der Brennraumdruck ebenso zunimmt, ist die Zugabe von mehr Kraftstoff bei der darauffolgenden Taktung gegeben.

Die später erfolgten Teilmengen in Form von Kraftstoffstrahlen werden dabei durch den erhöhten Brennraumdruck daran gehindert, an die Brennraumwand bzw. Brennraumbegrenzung zu gelangen. Somit wird eine Steigerung der eingespritzten Kraftstoffmenge bei der darauffolgenden Teilmenge während der Taktung ermöglicht, welche mittels einer Druckerhöhung des Kraftstoffeinspritzdruckes oder durch eine Verlängerung des Nadelhubes.

Durch eine erweiterte Taktdauer wird ebenso eine Steigerung der eingebrachten Kraftstoffmenge erzielt. Denkaber wäre auch eine gleichzeitige Kombination von zwei oder sogar von drei der zuvor genannten Maßnahmen.

Eine Abnahme der Einspritzteilmenge bei der letzten Taktung kann vorteilhaft sein, um eine vorzeitige Zündung des homogenisierten Gemisches vor Eintritt der Haupteinspritzung zu verhindern. Weiterhin kann durch die Verkleinerung der letzten Teilmenge bei der getakteten Voreinspritzung eine Überfettung der vorhomogenisierten Gemischwolke vermieden werden.

Um die Homogenisierungsrate während der Voreinspritzung zu erhöhen, wird im Brennraum eine Drallbewegung, beispielsweise durch einen Dralleinlasskanal erzeugt. Ziel ist es dabei, eine während eines Einspritztaktes erzeugte Kraftstoffwolke eines eingespritzten Kraftstoffstrahls zu versetzen bzw. seitlich derart zu verschieben oder fortzubewegen, dass bei einem nachfolgenden Einspritztakt der neu eingespritzte Kraftstoffstrahl nicht in die Kraftstoffwolke des vorangegangenen Kraftstoffstrahl eindringt.

Gemäß einer besonders vorteilhaften Ausführungsform findet für den homogenen Verbrennungsanteil die Voreinspritzung mit einer zwei- bis siebenfachen Taktung in einem Kompressionshubbereich von ca. 150°KW bis 30°KW vor dem oberen Totpunkt statt. Die Anzahl der Taktung sowie der Einspritzzeitpunkt der ersten Teilmenge können lastabhängig variiert werden.

Die Haupteinspritzung wird dagegen für den heterogenen Verbrennungsanteil in einem Bereich um den oberen Totpunkt entweder als eine Blockeinspritzung oder mit einem unterschiedlichen Einspritzverlauf vorgenommen, so dass innerhalb der Haupteinspritzdauerlänge der Durchfluss der eingespritzten Kraftstoffmenge variiert wird, um einen hohen Impuls der Einspritzstrahlen zu erzielen. Eine Haupteinspritzung mit unterschiedlichem Durchfluss kann mittels einer Druckmodulation und/oder durch eine Hubvariation der Düsennadel erzielt werden. Um den Erfordernissen für eine effektive und heterogene Verbrennung zu genügen, wird vorzugsweise der Einspritzdruck, beispielsweise durch eine druckmodulierbare Einspritzvorrichtung, auf ein maximales Niveau, beispielsweise zwischen 1800 und 2400 bar angehoben. Gegebenenfalls kann durch eine unmittelbar nach dem Schließen der Düsennadel bei der Blockeinspritzung eine kurze Nacheinspritzung folgen, um eine weitere Rußreduktion zu erzielen. Es ist denkbar, dass sowohl die Voreinspritzung als auch die Haupteinspritzung mit dem gleichen Kraftstoffdruck erfolgen. Dabei kann beispielsweise in einem Common-Rail-System ein Druckniveau zwischen 1000 und 1400 bar herrschen.

Wahlweise ist die Nacheinspritzung ein Teil der Haupteinspritzung. Um eine optimale Verbrennung zu erzielen, erfolgen die Haupteinspritzung und gegebenenfalls die Nacheinspritzung lastabhängig hintereinander um den oberen Totpunkt in einem Bereich von 10°KW vor dem oberen Totpunkt bis 40°KW nach dem oberen Totpunkt, wobei eine Düsennadelöffnungsdauer bei der Nacheinspritzung kleiner als die Nadelöffnungsdauer der Haupteinspritzung eingestellt wird. Optional kann auch eine späte Nacheinspritzung stattfinden, die wiederum an der Verbrennung nicht teilnimmt, und nur zur Regenerierung eine nachgeschalteten Abgasnachbenadlungsanlage dienen kann.

Bei dem erfindungsgemäßen Verfahren wird eine Einspritzstrategie vorgeschlagen, die es ermöglicht, eine vorteilhafte Kraftstoffstrahlausbreitung und Gemischbildung gezielt umzusetzen. Es wird sowohl eine homogene als auch eine heterogene kombinierte Verbrennung erzielt. Dabei wird eine Mehrlochdüse verwendet. Bevorzugt wird mittels eines geeigneten druckmodulierbaren Einspritzsystems der Einspritzdruck angepasst. Dabei kann ein Nadelhubgesteuertes E-System mit Druckmodulation verwendet werden.

Weitere Kriterien für die Gestaltung einer zusätzlichen Nacheinspritzung können sich aus der Anforderungen einer etwaigen Abgasnachbehandlungsmaßnahme ergeben.

Zur Durchführung des erfindungsgemäßen Verfahrens wird eine nach innen öffnende Düsennadel mit mehreren Einspritzbohrungen vorgeschlagen, bei der der Kraftstoff durch die Einspritzbohrungen in Form von.Kraftstoffstrahlen in den Brennraum eingespritzt wird, so dass zwischen den eingespritzten Kraftstoffstrahlen ein Spritzwinkel von 90° bis 160° einstellbar ist.

Erfindungsgemäß ist der Hub der Düsennadel in einer Öffnungsrichtung verstellbar, so dass während der getakteten Voreinspritzung der Hub der Düsennadel variabel eingestellt werden kann. Die Einstellung des Hubes kann wahlweise lastabhängig erfolgen. Dadurch wird die während der getakteten Voreinspritzung erfolgten Einspritzmenge variiert. Des Weiteren wird mit der Verstellung des Hubes eine instabile kavitierende Strömung in den Einspritzbohrungen der Einspritzdüse erzeugt.

Es wird für die Einspritzung des Kraftstoffs mindestens eine Einspritzdüse vorgeschlagen, welche im Zylinderkopf der Brennkraftmaschine in etwa zentral angeordnet ist. Es kann sich prinzipiell um eine konventionelle und damit kostengünsige Lochdüse vom Typ Sitzloch, Mini-Sackloch oder Sackloch handeln.

Gemäß einer bevorzugten Ausführungsform der Erfindung weist die Einspritzdüse sechs bis vierzehn Einspritzbohrungen auf, welche in einer oder zwei Lochreihen über dem Umfang verteilt angeordnet sind. Die Verteilung kann gleichmäßig erfolgen. Die Einspritzbohrungen sind jeweils um einen Winkel von 45° bis 80° zur Düsenachse geneigt. Der Spritzkegelwinkel beträgt ca. 90° bis 160°.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, wie in den beigefügten Ansprüchen definiert. Es zeigen:
- Fig. 1: einen schematischen Querschnitt durch eine Hubkolbenbrennkraftmaschine,
- Fig. 2: ein Diagramm für einen Verlauf einer Kraftstoffeinspritzung mit 5-fach getakteter Voreinspritzung und ansteigender Taktdauer und zunehmendem Nadelhub bei konstantem Einspritzdruck, sowie einer Haupteinspritzung mit Nacheinspritzung bei einem erhöhten Einspritzdruck,
- Fig. 3: ein Diagramm für einen Verlauf einer Kraftstoffeinspritzung mit 5-fach getakteter Voreinspritzung mit gleichbeleibender Taktdauer bei konstantem Nadelhub und steigendem Einspritzdruck während der Voreinspritzung, sowie einer Haupteinspritzung mit Nacheinspritzung bei einem erhöhten Einspritzdruck,
- Fig: 4: ein Diagramm für einen Verlauf einer Kraftstoffeinspritzung mit 4-fach getakteter Voreinspritzung mit ansteigender Taktdauer bei konstantem Einspritzdruck, sowie einer Haupteinspritzung mit Nacheinspritzung bei einem erhöhten Einspritzdruck, und
- Fig. 5: eine Schematische Darstellung der Wirkung einer instabilen kavitierenden Strömung im Düsenloch einer Mehrlochdüse.

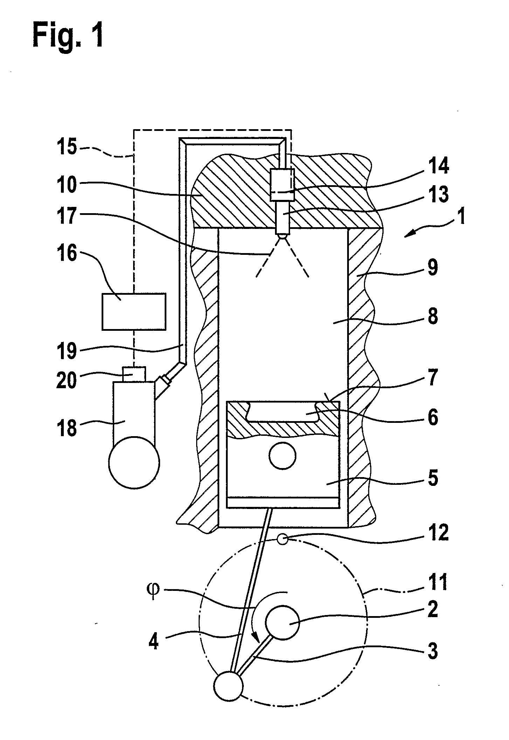

Fig. 1 zeigt eine Hubkolbenbrennkraftmaschine 1, bei der eine Kurbelwelle 2 durch einen in einem Zylinder 9 geführten Kolben 5 über eine Pleuelstange 4 angetrieben wird. Zwischen dem Kolben 5 und einem Zylinderkopf 10 wird im Zylinder 9 ein Brennraum 8 gebildet, der eine in den Kolbenboden 7 eingelassene Kolbenmulde 6 umfaßt.

Bei der Drehung einer Kurbel 3 der Kurbelwelle 2 auf einem Kurbelkreis 11 im Uhrzeigersinn verkleinert sich der Brennraum 8, wobei die in ihm eingeschlossene Luft verdichtet wird. Der Ladungswechsel im Brennraum 8 erfolgt über nicht dargestellte Gaswechselventile und Gaskanäle im Zylinderkopf 10.

Mit dem Erreichen eines oberen Totpunktes 12 der Kurbel 3, nachfolgend mit OT bezeichnet, ist das Ende der Verdichtung erreicht, bei dem der Brennraum 8 sein kleinstes Volumen annimmt und der höchste Verdichtungsdruck sowie die höchste Verdichtungstemperatur erreicht werden. Die aktuelle Lage des Kolbens 5 zum Zylinderkopf 10 wird durch den Kurbelwinkel ϕ in Bezug auf den oberen Totpunkt 12 bestimmt.

Eine Mehrlocheinspritzdüse 13 ist im Zylinderkopf 10 zentral angeordnet. Die Einspritzdüse 13 wird über eine Signalleitung 15 und einen Aktuator 14, beispielsweise einen Piezoaktuator, von einer elektronischen Steuereinheit 16, der Motorsteuerung, angesteuert. Die aus der Einspritzdüse austretenden Einspritzstrahlen sind mit 17 bezeichnet.

Der Kraftstoff wird von einer Einspritzpumpe 18 in mehreren Druckstufen zur Verfügung gestellt, wobei ein Absteuerventil 20, zweckmäßigerweise ein elektronisch ansteuerbares Magnetventil, den jeweiligen maximalen Druck in der Kraftstoffleitung 19 begrenzt.

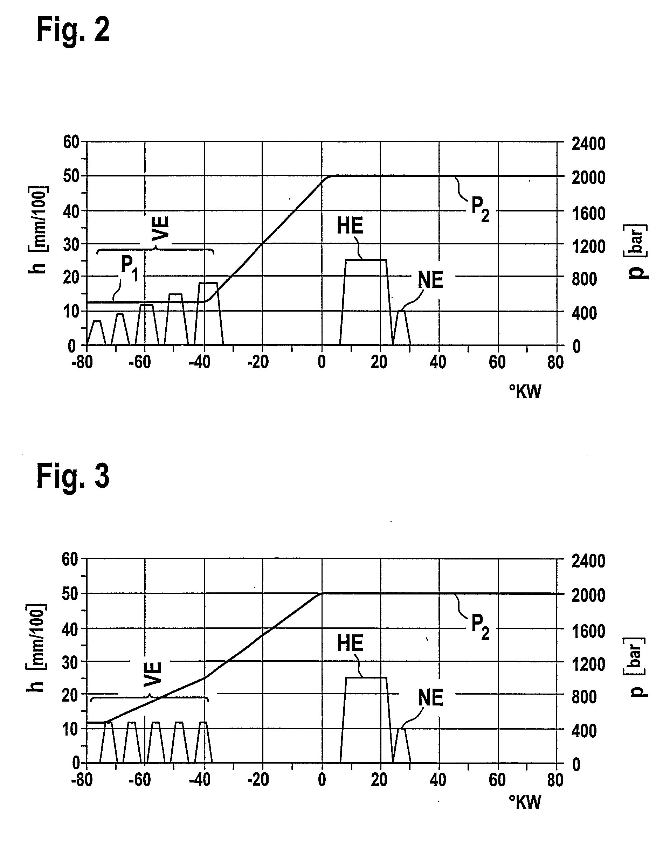

Eine erste Ausführungsform einer Kraftstoffeinspritzstrategie für die Hubkolbenbrennkraftmaschine 1 ist in Fig. 2 dargestellt Das Diagramm zeigt einen Verlauf der Kraftstoffeinspritzung für einen kombinierten Homogen/Heterogen-Betrieb mit 5-fach getakteter Voreinspritzung VE und ansteigender Taktdauer bei konstantem Einspritzdruck P₁, der beispielsweise 500 bar beträgt. Weiterhin zeigt Fig. 2 eine Haupteinspritzung HE sowie eine Nacheinspritzung NE bei einem erhöhten Einspritzdruck P₂, wobei während der Haupteinspritzung HE einen maximalen Nadelhub h eingestellt ist.

Gemäß der in Fig. 2 dargestellten Einspritzstrategie erfolgt zuerst bei einem Einspritzdruck P₁ eine getaktete Voreinspritzung VE im Kompressionshub der Hubkolbenbrennkraftmaschine 1 in einem Kurbelwinkelbereich von 80°KW bis etwa 35°KW vor OT. Die getaktete Voreinspritzung VE erfolgt derart, dass bei jeder Taktung einen unterschiedlichen Nadelhub h eingestellt wird. Durch die gezielte Taktung der Voreinspritzung VE wird eine Homogenisierung der eingespritzten Teilmengen erreicht. Es wird eine steigende Nadelhubeinstellung bevorzugt. Die Haupt- und Nacheinspritzung erfolgen nacheinander bei einem höheren Einspritzdruck P₂ in einem Bereich zwischen OT und etwa 30°KW nach OT. Bei der Haupteinspritzung HE wird ein höherer Nadelhub h als bei der Voreinspritzung VE eingestellt, wobei eine Nadelöffnungsdauer bei der Nacheinspritzung NE kleiner als die Nadelöffnungsdauer der Haupteinspritzung HE eingestellt wird.

In Fig. 3 ist ein Diagramm dargestellt, in dem für die Hubkolbenbrennkraftmaschine 1 eine alternative Einspritzstrategie gezeigt ist. Darin ist der Verlauf einer Kraftstoffeinspritzung dargestellt, mit der einen kombinierten Homogen/Heterogen-Betrieb mit 5-fach getakteter Voreinspritzung VE zur Homogenisierung mit gleichbeleibender Taktdauer und steigendem Einspritzdruck während der Voreinspritzung VE, sowie einer Haupteinspritzung HE mit einem erhöhten Einspritzdruck P2 bei einem maximal eingestellten Nadelhub h und einer Nacheinspritzung NE erzielt wird.

Die getaktete Voreinspritzung VE gemäß Fig. 3 erfolgt im Kompressionshub in einem Kurbelwinkelbereich von etwa 80°KW bis etwa 35°KW vor OT. Sie erfolgt derart, dass bei jeder Taktung der Einspritzdruck zunimmt, d.h. während der Voreinspritzung VE herrscht in einer Kraftstoffleitung, beispielsweise in einem Common-Rail-Einspritzsystem, der Leitung bei der früh erfolgten Einspritzung ein niedriger Druck als bei der darauffolgenden Einspritzung, wobei der Nadelhub h während der getakteten Voreinspritzung VE konstant bleibt. Die Haupt- und Nacheinspritzung erfolgen nacheinander bei einem höheren Einspritzdruck P2 in einem Bereich zwischen dem oberen Totpunkt und etwa 30°KW nach OT. Bei der Haupteinspritzung HE wird ein höherer Nadelhub h als bei der Voreinspritzung VE eingestellt, wobei eine Nadelöffnungsdauer bei der Nacheinspritzung NE kleiner als die Nadelöffnungsdauer der Haupteinspritzung HE eingestellt wird.

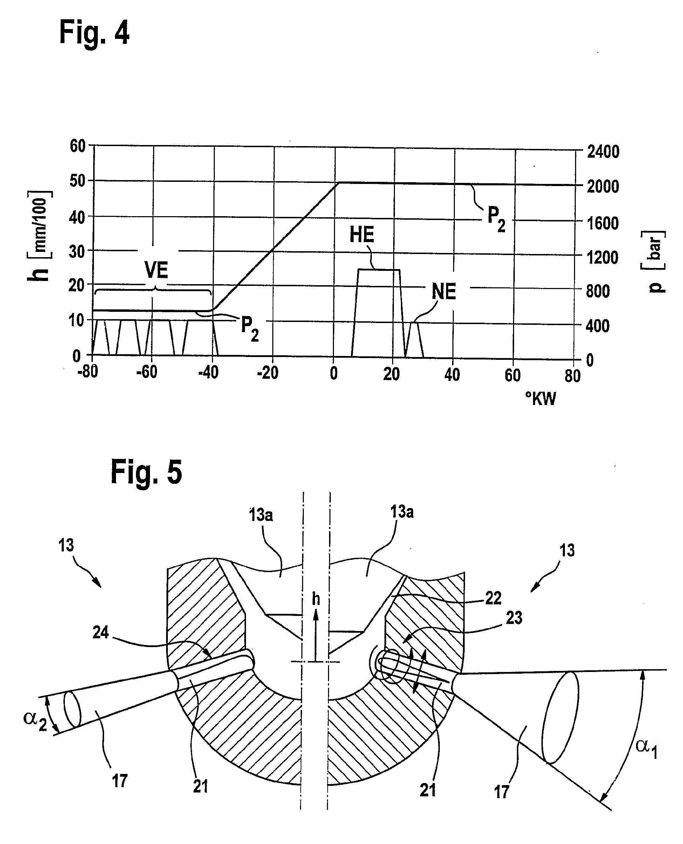

Eine besonders vorteilhafte Einspritzstrategie sieht der Einspritzverlauf gemäß Fig. 4 vor. Darin wird ein kombinierter Homogen/Heterogen-Betrieb mit 4-fach getakteter Voreinspritzung mit ansteigender Taktdauer bei konstantem Einspritzdruck vorgeschlagen, bei dem die Düsennadel 13a bei einer unteren Hubstellung verharrt. Weiterhin ist eine Haupteinspritzung HE bei einem erhöhten Einspritzdruck P2 und einem maximal eingestelltem Nadelhub h sowie eine Nacheinspritzung NE vorgesehen.

Die getaktete Voreinspritzung VE erfolgt im Kompressionshub in einem Kurbelwinkelbereich von 80°KW bis etwa 35° KW vor OT. Sie wird derart vorgenommen, dass bei jeder Taktung der Einspritzdruck P1 konstant bleibt. Der Nadelhub h bleibt ebenso während der getakteten Voreinspritzung VE konstant. Die Haupt- und Nacheinspritzung erfolgen nacheinander bei einem höheren Einspritzdruck P2 in einem Bereich zwischen dem oberen Totpunkt und etwa 35°KW nach OT. Bei der Haupteinspritzung HE wird ein höherer Nadelhub h als bei der Voreinspritzung VE eingestellt, wobei eine Nadelöffnungsdauer bei der Nacheinspritzung NE kleiner als die Nadelöffnungsdauer der Haupteinspritzung HE eingestellt wird.

Der niedrige Einspritzdruck P₁ in den o. g. Einspritzstrategien gemäß Fig. 2, 3 und 4 ist so gewählt, dass durch die getaktete Voreinspritzung VE eine homogene Gemischbildung erfolgt, bei der sich der eingespritzte Kraftstoff in nicht signifikantem Maße an der Brennraumbegrenzung des Brennraums 8 anlagert.

Die Haupteinspritzung HE des Kraftstoffs im Bereich des oberen Totpunkts dient bei den oben beschriebenen Einspritzstrategien einer heterogenen Gemischbildung und erlaubt eine Laststeigerung über die, durch den homogenen Anteil erzielbare Last hinaus. Zum Zeitpunkt der Haupteinspritzung HE ist eine Cool-Flame-Verbrennung des homogenen Anteils abgeschlossen und eine Hot-Flame-Verbrennung findet statt. Die Haupteinspritzung wird derart gestaltet, dass ein durch die Hauptverbrennung erzieltes Temperaturniveau nicht im Bereich verstärkter NOx-Bildung (Zeldovich-Mechanismus) liegt. Die Nacheinspritzung dient einer Reduktion der entstandenen Rußpartikel, da durch eine Herabsetzung der Haupteinspritzmenge um die Nacheinspritzmenge die Bildung von kraftstoffreichen Zonen verhindert werden kann.

In Fig. 5 ist eine Schematische Darstellung der Einspritzdüse 13 vom Typ Sacklochdüse, wobei eine Düse vom Typ Sitzlochdüse sich ebenso gut eignen würde. In der Einspritzdüse 13 gemäß Fig. 5 ist die Wirkung einer hervorgerufenen instabilen kavitierenden Strömung in einem Düsenloch 21 der Einspritzdüse 13 bei geringem Nadelhub h der Düsennadel 13a, d. h. bei teilweise geöffneter Einspritzdüse 13, und die dadurch erzielte Wirkung auf den Ausbreitungswinkel des Einspritzstrahls 17 dargestellt.

Auf der rechten Seite in Fig. 5 ist die Einspritzdüse 13 nur teilweise geöffnet, wodurch eine Drosselung im Düsennadelsitz 22 erzielt wird. Durch diese Drosselung tritt im Düsenloch 21 eine instabile kavitierende Strömung auf, die zum Ausbreitungswinkel α₁ des Kraftstoffstrahls 17 führt. Im Vergleich zu einer Einspritzdüse mit maximaler Hubeinstellung, wie auf der linken Seite der Fig. 5 dargestellt, ist der Ausbreitungswinkel α₁ durch die instabile kavitierende Strömung größer als ein Ausbreitungswinkel α₂, der ohne eine solche Strömung bewirkt wird. Die instabile kavitierende Strömung ruft starke Fluktuationen der Düseninnenströmung 23 hervor, welche beim Kraftstoffaustritt aus dem Düsenloch 21 zu einem verstärkten Kraftstoffstrahlzerfall führen und somit zu einem großen Ausbreitungswinkel α₁.

Der Kraftstoffstrahl mit dem Ausbreitungswinkel α₁ breitet sich im Brennraum mit einer intensiven Zerstäubung aus, und bewirkt somit eine bessere Homogenisierung sowie eine schnelle Kraftstoffverdampfung, so dass mehr Kraftstoff in einer Teilmenge der Voreinspritzung VE ohne eine nennenswerte Brennraumwandbenetzung eingespritzt werden kann.

Dagegen wird bei der Einspritzdüse 13 mit der maximalen Hubeinstellung gemäß der linken Seite in Fig. 5 eine stabile kavitierende Strömung ausgebildet. Diese ruft im inneren des Düsenlochs 21 auf der linken Seite eine zweiphasige Strömung 24 hervor, welche zu einem normalen Kraftstoffzerfall führt. Im Vergleich zu einer teilweise geöffneten Einspritzdüse ist der Ausbreitungswinkel α₂ durch die stabile kavitierende Strömung kleiner als der Ausbreitungswinkel α₁.

Die Erfindung geht von einem Verfahren zum Betrieb einer Hubkolbenbrennkraftmaschine aus, bei der Kraftstoff mittels einer Einspritzdüse mit mehreren Einspritzbohrungen direkt in einen Brennraum als Vor- und Haupteinspritzung einspritzt wird, wobei die Voreinspritzung getaktet erfolgt. Um die Benetzung der Brennraumwände und vor allem eine Zylinderlaufbahn zu minimieren, wird vorgeschlagen, dass während der Haupteinspritzung wahlweise in einer Einspritzvorrichtung ein höher Kraftstoffdruck als während der Voreinspritzung herrscht. Weiterhin wird eine optimale Homogenisierung der voreingespritzten Kraftstoffmenge durch eine Begrenzung der Reichweite der einsgespritzten Kraftstoffstrahlen bei einer gleichzeitigen Maximierung der Zerstäubung der Kraftstoffteilchen sowie Verstärkung des Kraftstoffstrahlzerfalls während der getakteten Voreinspritzung.

## Patentansprüche

1. Verfahren zum Betrieb einer selbstzündenden Hubkolbenbrennkraftmaschine, bei der Kraftstoff mittels einer eine Düsennadel und Einspritzbohrungen umfassenden Einspritzdüse in mehreren Kraftstoffstrahlen bestimmter Reichweite direkt in einen Brennraum eingespritzt wird, wobei aus einem Einspritzzyklus ein Teil des Kraftstoffes im Verdichtungstakt als getaktete Voreinspritzung in Teilmengen und der restliche Kraftstoff als Haupteinspritzung zu einem späteren Zeitpunkt in den Brennraum mit einem höheren Einspritzdruck als während der Voreinspritzung eingespritzt wird, **gekennzeichnet durch**
eine derartige Taktung der Voreinspritzung, dass bei jeder Teilmenge die Reichweite des Kraftstoffstrahls im Brennraum so begrenzt wird, dass die Reichweite in etwa kleiner ist als eine Entfernung bis zu einer Brennraumbegrenzung, wobei gleichzeitig ein Zerfall der eingespritzten Kraftstoffstrahlen verstärkt wird und der Hub der Düsennadel der Einspritzdüse derart variiert wird, dass eine instabile kavitierende Strömung in den Einspritzbohrungen der Einspritzdüse erzeugt wird, wodurch eine erhöhte Zerstäubung der Kraftstoffs im Brennraum erzielt wird.

2. Verfahren nach Anspruch 1,
**dadurch gekennzeichnet, dass**
während der getakteten Voreinspritzung ein Hub der Düsennadel der Einspritzdüse variiert wird.

3. Verfahren nach Anspruch 1 oder 2,
**dadurch gekennzeichnet, dass**
der Druck des eingespritzten Kraftstoffs während der getakteten Voreinspritzung angehoben wird.

4. Verfahren nach einem der vorhergehenden Ansprüche,
**dadurch gekennzeichnet, dass**
eine Taktdauer während der Voreinspritzung variiert wird, so dass die Kraftstoffteilmengen der Voreinspritzung unterschiedlich erfolgen.

5. Verfahren nach einem der vorhergehenden Ansprüche,
**dadurch gekennzeichnet, dass**
die Taktdauer der Voreinspritzung variiert wird, so dass eine später eingespritzte Kraftstoffteilmenge größer als eine vorherige Kraftstoffteilmenge erfolgt.

6. Verfahren nach Anspruch 4 oder 5,
**dadurch gekennzeichnet, dass**
die letzte Kraftstoffteilmenge der Voreinspritzung gegenüber einer größten und vorher erfolgten Kraftstoffteilmenge der Voreinspritzung verringert wird.

7. Verfahren nach einem der vorhergehenden Ansprüche,
**dadurch gekennzeichnet, dass**
der Hub der Düsennadel der Einspritzdüse derart variiert wird, dass innerhalb der Einspritzdüse ein effektiver Strömungsquerschnitt zwischen der Düsennadel und einem Düsennadelsitz etwa das 0.4 bis 1.5-fache eines effektiven Strömungsquerschnittes der Summe aller Einspritzbohrungen beträgt.

8. Verfahren nach einem der vorhergehenden Ansprüche,
**dadurch gekennzeichnet, dass**
während der Voreinspritzung mittels einer im Brennraum gebildeten Drallbewegung eine während eines Einspritztaktes erzeugte Kraftstoffwolke eines Kraftstoffstrahls versetzt oder seitlich verschoben wird, so dass bei einem nachfolgenden Einspritztakt die neu eingespritzten Kraftstoffstrahlen nicht in die Kraftstoffwolke der vorangegangenen Einsprittaktes eindringen.

9. Verfahren nach einem der vorhergehenden Ansprüche,
**dadurch gekennzeichnet, dass**
die Voreinspritzung in einer zwei- bis siebenfachen Taktung in einem Kompressionshubbereich von ca. 150°KW bis 30°KW vor dem oberen Totpunkt erfolgt.

10. Verfahren nach einem der vorhergehenden Ansprüche,
**dadurch gekennzeichnet, dass**
wahlweise ein Teil der Haupteinspritzung als eine Nacheinspritzung erfolgt, und die Haupteinspritzung und gegebenenfalls die Nacheinspritzung hintereinander um den oberen Totpunkt in einem Bereich von 10°KW vor dem oberen Totpunkt bis 40°KW nach dem oberen Totpunkt erfolgen.

## Claims

1. Method for operating a self-igniting reciprocating internal combustion engine, wherein the fuel is injected directly into a combustion chamber in several fuel jets of a specified reach by means of an injector comprising a jet needle and injection bores, wherein, from an injection cycle, a part of the fuel is injected in the compression stroke as timed pilot injection in part-quantities and the remaining fuel is injected into the combustion chamber as main injection at a later point in time with a higher injection pressure than during pilot injection,
**characterised by**
a timing of the pilot injection which is designed such that in each part-quantity the reach of the fuel jet in the combustion chamber is limited in such a way that the reach is somewhat less than a distance to a combustion chamber boundary, wherein at the same time a disintegration of the injected fuel jets is intensified and the stroke of the jet needle of the injector is varied in such a way that an unstable cavitating flow is generated in the injection bores of the injector, whereby an increased atomisation of the fuel in the combustion chamber is achieved.

2. Method according to claim 1,
**characterised in that**
a stroke of the jet needle of the injector is varied during the timed pilot injection.

3. Method according to claim 1 or 2,
**characterised in that**
the pressure of the injected fuel is increased during the timed pilot injection.

4. Method according to any of the preceding claims,
**characterised in that**
a cycle duration is varied during pilot injection, so that the fuel part-quantities of pilot injection differ.

5. Method according to any of the preceding claims,
**characterised in that**
the cycle duration of pilot injection is varied, so that a fuel part-quantity injected later is bigger than a previous fuel part-quantity.

6. Method according to claim 4 or 5,
**characterised in that**
the last fuel part-quantity of pilot injection is reduced compared to a maximum and earlier fuel part-quantity of pilot injection.

7. Method according to any of the preceding claims,
**characterised in that**
the stroke of the jet needle of the injector is varied in such a way that, within the injector, an effective flow cross-section between the jet needle and a jet needle seat amounts to approximately 0.4 to 1.5 times an effective flow cross-section of the sum of all injection bores.

8. Method according to any of the preceding claims,
**characterised in that**
during pilot injection a fuel cloud of a fuel jet, which is generated by means of a swirling movement formed in the combustion chamber during an injection cycle, is offset or displaced laterally, so that, in a subsequent injection cycle, the newly injected fuel jets do not penetrate into the fuel cloud of the previous injection cycle.

9. Method according to any of the preceding claims,
**characterised in that**
the pilot injection happens in a two- to seven-fold timing in a compression stroke range of approximately 150 degrees crankshaft angle to 30 degrees crankshaft angle before top dead centre.

10. Method according to any of the preceding claims,
**characterised in that**
a part of main injection optionally happens in the form of a post-injection, and main injection and post-injection, if applicable, happen one after the other about top dead centre in a range of 10 degrees crankshaft angle before top dead centre to 40 degrees crankshaft angle after top dead centre.

## Revendications

1. Procédé de fonctionnement d'un moteur à combustion interne à piston alternatif à autoallumage, selon lequel le carburant est injecté au moyen un gicleur d'injection comprenant une aiguille d'injecteur et des orifices d'injection dans plusieurs jets de carburant d'une portée définie directement dans une chambre de combustion, à partir d'un cycle d'injection une partie du carburant étant injectée dans un temps de compression en tant que préinjection cadencée en quantités partielles et le reste du carburant en tant qu'injection principale étant injecté plus tard dans la chambre de combustion à l'aide d'une pression d'injection supérieure à celle pendant la préinjection **caractérisé par** une telle cadence de la préinjection, que pour chaque quantité partielle la portée du jet de carburant est limitée dans la chambre de combustion de telle sorte que la portée soit quelque peu inférieure à une distance par rapport à une limite de chambre de combustion, simultanément une désintégration des jets de carburant injectés étant renforcée et la levée de l'aiguille d'injection du gicleur d'injection étant modifiée de telle manière qu'un écoulement cavitaire instable se produit dans les alésages d'injection du gicleur d'injecteur, permettant ainsi l'obtention d'une pulvérisation améliorée du carburant dans la chambre de combustion.

2. Procédé selon la revendication 1, **caractérisé en ce que** pendant la préinjection cadencée une levée de l'aiguille d'injection du gicleur d'injecteur est modifiée.

3. Procédé selon la revendication 1 ou la revendication 2, **caractérisé en ce que** la pression du carburant injecté pendant la préinjection cadencée est augmentée.

4. Procédé selon l'une quelconque des revendications précédentes, **caractérisé en ce qu'**une durée de cadence pendant la préinjection est modifiée, de manière que les quantités partielles de carburant de la préinjection soient différentes.

5. Procédé selon l'une quelconque des revendications précédentes, **caractérisé en ce que** la durée de cadence de la préinjection est modifiée de telle manière qu'une quantité partielle de carburant injectée ultérieurement soit supérieure à une quantité partielle de carburant préalable.

6. Procédé selon la revendication 4 ou la revendication 5, **caractérisé en ce que** la dernière quantité partielle de carburant de la préinjection est réduite par rapport à une quantité partielle supérieure, préalable de carburant de la préinjection.

7. Procédé selon l'une quelconque des revendications précédentes, **caractérisé en ce que** la levée de l'aiguille d'injection du gicleur d'injection est modifiée de telle manière que dans le gicleur d'injection une section de passage effectif entre l'aiguille d'injection et un siège de gicleur d'injection soit environ entre 0,4 et 1,5 fois la section de passage effectif de la somme de tous les alésages d'injection.

8. Procédé selon l'une quelconque des revendications précédentes, **caractérisé en ce que** pendant la préinjection au moyen d'un mouvement tourbillonnaire formé dans la chambre de combustion un nuage de carburant d'un jet de carburant généré pendant une cadence d'injection est déplacé ou poussé latéralement de manière que lors d'une cadence d'injection suivante les jets de carburant nouvellement injectés ne pénètrent pas dans le nuage de carburant de la cadence d'injection précédente.

9. Procédé selon l'une quelconque des revendications précédentes, **caractérisé en ce que** la préinjection s'effectue à une cadence double ou septuple dans une plage de montée de compression comprise environ entre 150°KW et 30°KW avant le point mort.

10. Procédé selon l'une quelconque des revendications précédentes, **caractérisé en ce qu'**au choix une partie de l'injection principale s'effectue en tant que post-injection et l'injection principale et si nécessaire la post-injection ont lieu successivement autour du point mort supérieur dans la plage comprise entre 10 KW avant le point mort supérieur et à 40 KW après le point mort supérieur.
